# EUROPÄISCHE PATENTSCHRIFT

(11) **EP 0 514 430 B1**
(45) Veröffentlichungstag und Bekanntmachung des Hinweises auf die Patenterteilung: **26.10.1994**
(21) Anmeldenummer: 91903632.7
(22) Anmeldetag: 05.02.1991
(51) Int. Cl.: B29C 45/40, B29C 45/42

(54) **VERFAHREN ZUM ENTFORMEN EINES FORMTEILS SOWIE VORRICHTUNG ZUR DURCHFÜHRUNG DES VERFAHRENS**
PROCESS AND DEVICE FOR REMOVING A MOULDED POT FROM A MOULD
PROCEDE ET DISPOSITIF DE DEMOULAGE DE PIECES MOULES

(30) Priorität: 05.02.1990 DE 4003371
(43) Veröffentlichungstag der Anmeldung: 25.11.1992
(73) Patentinhaber: HERBST, Richard, D-85386 Eching (DE)
(72) Erfinder: HERBST, Richard, D-85386 Eching (DE)
(74) Vertreter: Witte, Alexander, Dr.-Ing.
(86) Internationale Anmeldenummer: EP9100220
(87) Internationale Veröffentlichungsnummer: WO9111313

(56) Entgegenhaltungen:
- DE-A- 2 519 411
- DE-B- 1 145 783
- Patent Abstracts of Japan, volume 10, No. 191 (M-495)(2247), 4 July 1986, & JP, A, 61035214 (SUMITOMO BAKELITE CO.) 19 February 1986
- Patent Abstracts of Japan, volume 13 (M-783) 12 January 1989, & JP, A, 63224853 (MAZDA MOTOR CORP.) 19 September 1988
- Patent Abstracts of Japan, volume 14, No. 23 (M-920)(3966), 17 January 1990 & JP, A, 1263018 (MITSUBISHI HEAVY IND. LTD) 19 October 1989
- Patent Abstracts of Japan, volume 11, No. 321, (M-633)(2768), 20 October 1987 & JP, A, 62104723 (MEIKI CO.) 15 May 1987
- Patent Abstracts of Japan, volume 12, No. 45 (M-667)(2892), 10 February 1988 & JP, A, 62197261 (TOYA KIKAI KINZOKU) 31 August 1987
- Patent Abstracts of Japan, volume 11, No. 21 (M-555)(2468), 21 January 1987 & JP, A, 61195817 (NISSEI PLASTICS) 30 August 1986

## Beschreibung

Die Erfindung betrifft ein Verfahren zum Entformen eines Formteils aus einer Form von der im Oberbegriff des Anspruchs 1 angegebenen Art, sowie eine Vorrichtung zur Durchführung des Verfahrens, vgl. z.B. JP-A-63224853.

Die Erfindung ist prinzipiell bei allen Formgebungsverfahren anwendbar, bei denen ein Formteil aus beliebigem Werkstoff in einer Form geformt und dann aus der geöffneten Form entnommen wird; bevorzugtes Anwendungsgebiet ist die Herstellung von Kunststoff-Formteilen durch Spritzgießen. Der komplette Ablauf der Entformung eines Formteils umfaßt das Öffnen der Form, das Einfahren eines Greifwerkzeugs, das zu einem Handling-Gerät, Roboter, Manipulator oder dgl. gehört, zwischen die geöffneten Formhälften, das Ausstoßen des Formteils mittels der Auswerferelemente aus der einen Formhälfte bis zum Ergreifen durch das Greifwerkzeug, und das anschließende Herausfahren des Greifwerkzeugs mit dem ergriffenen Formteil aus dem Bereich der Form. Um die Formmaschine, z.B. eine Spritzgießmaschine, mit möglichst hoher Taktzahl betreiben zu können, sollten die genannten Entformungsvorgänge mit möglichst hoher Geschwindigkeit ablaufen. Der Ausstoßgeschwindigkeit, mit der das Formteil aus der Formhälfte herausbewegt wird, sind aber Grenzen gesetzt, da eine zu hohe Ausstoßgeschwindigkeit zu Beschädigungen des-Formteils führen kann. Dies gilt insbesondere bei großflächigen Formteilen, bei denen große Haftungs- und Ansaugkräfte zwischen dem Formteil und den entsprechenden Formwänden auftreten. Die Beschädigungsgefahr hängt auch davon ab, wie dünnwandig das Werkstück ist und an wie vielen Stellen es von den Auswerferelementen ergriffen und abgestützt wird. Das Ausstoßen des Formteils muß so erfolgen, daß dieses insbesondere durch das überwinden der Haftung zwischen dem Formteil und den Formwänden, und durch das Beschleunigen des Formteils nicht beschädigt wird. Hier muß das Ausstoßen so langsam erfolgen, daß das Auftreten eines unzulässig hohen Unterdrucks zwischen Formteil und Formwänden vermieden wird.

Der Erfindung liegt die Aufgabe zugrunde, ein Verfahren und eine Vorrichtung anzugeben, mit der der gesamte Entformungsvorgang in kürzerer Zeit, gleichwohl aber ohne unzulässige Beanspruchung des Formteils durchgeführt werden kann.

Diese Aufgabe wird erfindungsgemäß mit dem in Anspruch 1 angegebenen Verfahren gelöst. Die Unteransprüche geben weitere vorteilhafte Merkmale des erfindungsgemäßen Verfahrens und einer Vorrichtung zur Durchführung des Verfahrens an.

Da bei dem erfindungsgemäßen Verfahren das Formteil im ersten Teilhub nur bis in eine Zwischenstellung bewegt wird, insbesondere eine solche, in der es die Einfahrbewegung des Greifwerkzeuges nicht behindert, kann dieser erste Teilhub schon vor dem Einfahren des Greifwerkzeuges und sogar schon vor Beendigung der Öffnungsbewegung der Form begonnen werden. Es steht somit für diesen ersten Teilhub eine ausreichende Zeit zur Verfügung, so daß dieser erste Teilhub mit niedriger Geschwindigkeit und daher schonend für das Formteil durchgeführt werden kann. In diesem ersten Teilhub soll im wesentlichen eine Ablösung und Freistellung der Hauptflächen des Formteils von den entsprechenden Formwänden unter Überwindung der Haftkräfte erfolgen. Nach dem Einfahren des Greifwerkzeuges kann dann der zweite Teilhub der Ausstoßbewegung in sehr kurzer Zeit durchgeführt werden, weil einerseits nur noch eine restliche Wegstrecke zurückzulegen ist und andererseits das bereits von den Formwänden abgelöste Formteil gefahrlos mit höherer Geschwindigkeit bewegt werden kann. Wegen des schonenden Ausstoßvorganges ist es auch bei empfindlichen und dünnwandigen Formteilen möglich, mit relativ wenigen Auswerferelementen zu arbeiten.

Eine Ausführungsform der Erfindung wird anhand der Zeichnungen näher erläutert. Es zeigt:
- Fig. 1: eine schematisch vereinfachte Darstellung der verschiedenen Phasen des Entformungsvorgangs bei dem erfindungsgemäßen Verfahren;
- Fig. 2: einen Schnitt durch die erfindungsgemäße Vorrichtung in der Zwischenstellung des Entformungsvorgangs;
- Fig. 3: ein Wegzeitdiagramm der Bewegungen des Formwerkzeugs, des Auswerfers und des Greifwerkzeuges.

Die Erfindung wird beispielsweise anhand einer Spritzgießmaschine zur Formung von Formteilen aus Kunststoff erläutert.

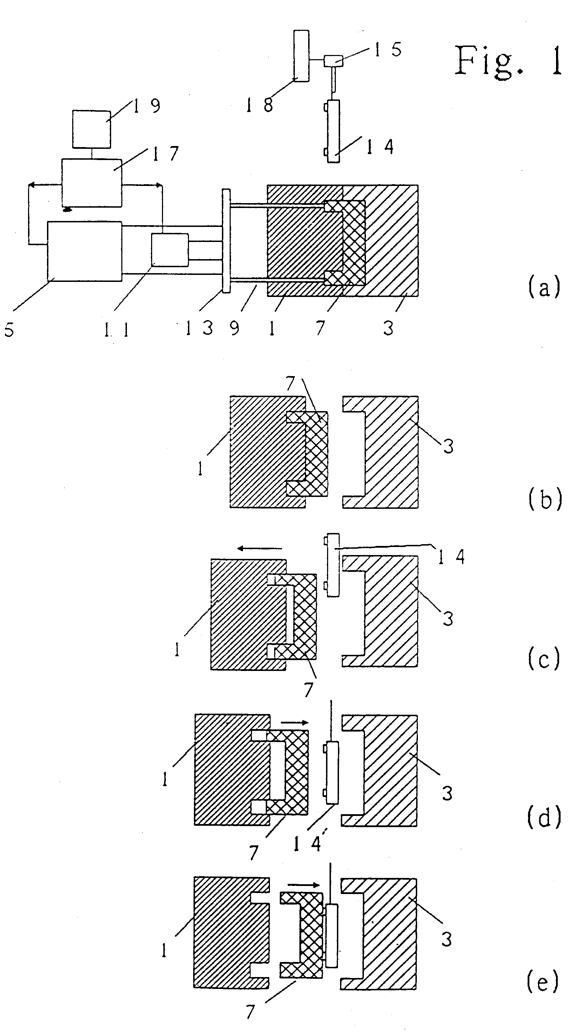

Wie in Fig. 1a dargestellt, wird eine Spritzgießform von zwei Formhälften 1, 3 gebildet, wobei die eine Formhälfte 1 durch einen Formantrieb 5 bewegt werden kann, um die Form zu öffnen. Der Antrieb 5 ist in der Regel ein Hydraulikzylinder, kann aber auch ein pneumatischer Zylinder, ein Elektroantrieb oder ein mechanischer Antrieb sein. In dem von den Formhälften 1, 3 gebildeten Formhohlraum befindet sich ein bereits fertig geformtes Kunststoff-Formteil 7. Auf dieses wirken an der Formhälfte 1 gelagerte Auswerferstifte 9, die durch einen Auswerferantrieb 11 über eine Auswerferplatte 13 betätigbar sind. Ein nur schematisch dargestelltes Greifwerkzeug 14 eines Handling-Gerätes, Roboters, Manipulators oder dgl. ist mittels eines Greiferantriehes 15 zwischen die geöffneten Formhälften 1, 3 ein fahrbar, um das Formteil 3 aufzunehmen. Auch der Auswerferantrieb 11 und der Greiferantrieb 15 kann jeweils als Hydraulik- oder Pneumatikzylinder, elektrischer oder mechanischer Antrieb ausgebildet sein. Der Formantrieb 5 und Auswerferantrieb 11 werden z.B. von einer Hydrauliksteuerung 17 in Abhängigkeit von einem Steuergerät 19 in der richtigen funktionellen Abfolge betätigt, während der Greifantrieb 15 des Handling-Gerätes oder dgl. ebenfalls von dem Steuergerät 19 gesteuert ist oder ein eigenes Steuergerät 18 aufweist. Die Steuergeräte 18, 19 arbeiten in an sich bekannter Weise in Abhängigkeit von Positionsgebern, die die Positionen der Formhälfte 1 und des Greifwerkzeuges 14 erfassen und jeweils wegabhängig die aufeinanderfolgenden Bewegungsvorgänge auslösen.

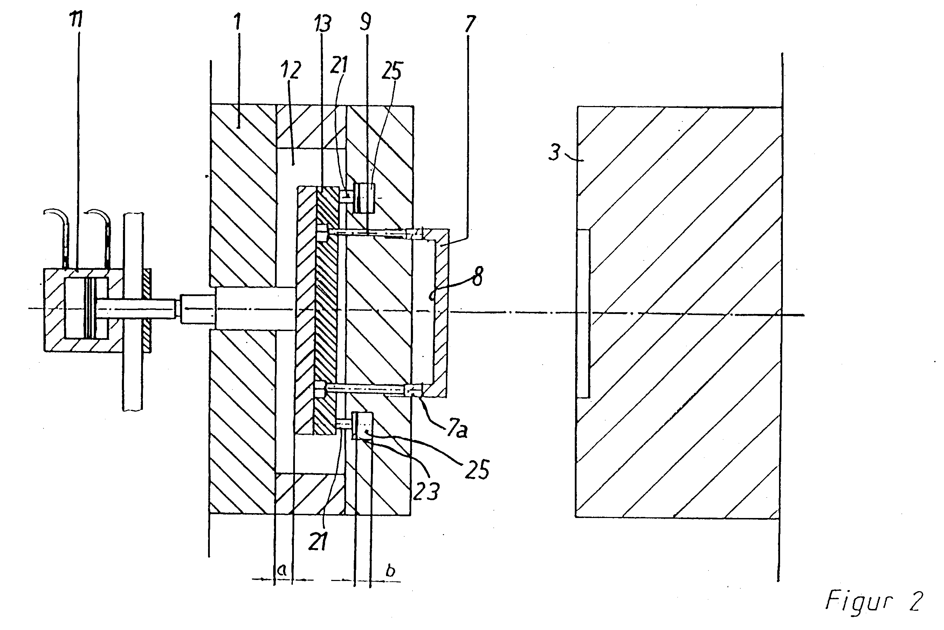

Ausgehend von der geschlossenen Stellung der Form gemäß Fig. 1a läuft der erfindungsgemäße Entformungsvorgang wie folgt ab: Die bewegliche Formhälfte 1 wird in Fig. 1 nach links bewegt, um die Form zu öffnen (Fig. 1b). Dabei wird das Formteil 7 in der Formhälfte 1 nach links mitgenommen und trennt sich von der feststehenden Formhälfte 3. Bereits während dieser Öffnungsbewegung der Form beginnt aber auch die Auswerferplatte 13 sich relativ zur Formhälfte 1 nach rechts zu bewegen, um das Formteil 7 von der Formhälfte 1 abzulösen (Fig. 1c). In Fig. 1d ist die Formhälfte 1 in der Endstellung angekommen, so daß das Greifwerkzeug 14 zwischen die Formhälften eingefahren werden kann. Während der Einfahrbewegung des Greifwerkzeugs 14 wird der erste Teilhub der Ausstoßbewegung des Formteils 7 beendet; zu diesem Zeitpunkt hat sich die Auswerferplatte 13 um die Teilhubstrecke a (vgl. Fig. 2) nach rechts bewegt und das Formteil 7 in die Zwischenstellung gebracht, in der seine Hauptflächen von den entsprechenden Wänden der Formhälfte 1 abgelöst sind, das Formteil 7 aber immer noch teilweise in die Formhälfte 1 eingreift und von dieser in Position für das Greifwerkzeug gehalten wird (Fig. 1d).

In der Zwischenstellung verbleibt das Formteil 7 so lange, bis das Greifwerkzeug 14 die vollständig eingefahrene Stellung 14' erreicht hat. Dann beginnt aus der Stellung nach Fig. 1d der zweite Teilhub, bei dem die Auswerferplatte 13 mit größerer Geschwindigkeit nach rechts bewegt wird, um das Formteil 7 aus der Zwischenstellung gemäß Fig. 1d in eine völlig von der Formhälfte 1 freigestellte Position unter gleichzeitigem Ergreifen durch das Greifwerkzeug 14 zu bringen.

Fig. 1e zeigt die Endstellung, in der sich die Auswerferplatte 13 über ihren vollen Hub, d.h. die Summe der Teilhubstrecken a und b bewegt hat und das Formteil 7 sich in der Entnahmeposition befindet, in der es vollständig vom Greifwerkzeug 14 ergriffen ist und nun zwischen den Formhälften 1, 3 herausbewegt werden kann.

Fig. 2 zeigt die geöffnete Form in der Zwischenstellung entsprechend Fig. 1c. Die bewegliche Formhälfte 1 hat einen Hohlraum 12, in welchem die Auswerferplatte 13 angeordnet ist, die mittels des hydraulischen Auswerferzylinders 11 betätigbar ist. An der Auswerferplatte 13 sind Auswerferstifte 9 befestigt, die auf das Formteil 7, z.B. ein Spritzgußteil, wirken. An der Formhälfte 1 sind ferner Anschlagstifte 21 gelagert, die mit Kolben 23 von Hydraulikzylindern 25 verbunden sind. Werden die Zylinder 25 über (nicht dargestellte) Kanäle mit Druckmittel beaufschlagt, so werden die Anschlagstifte 21 in einer Anschlagposition gehalten, in der sie in den Hohlraum 12 vorspringen und als Anschläge gegen die Vorderseite der Auswerferplatte 13 wirken. Die Gesamtfläche aller Kolben 23 ist größer als die wirksame Kolbenfläche des Auswerferzylinders 11. Die Auswerferplatte 13 wird daher nach Durchlaufen einer ersten Teilhubstrecke a von den Anschlagstiften 21 angehalten. Während dieses ersten Teilhubes werden die großflächigen Oberflächenbereiche 8 des Formteils 7 von den entsprechenden Wandbereichen der Formhälfte 1 abgelöst, und da für diesen Teilhub ausreichend Zeit zur Verfügung steht, kann er mit niedriger Geschwindigkeit ohne Beschädigung des Formteils 7 erfolgen. Vorspringende Teile 7a des Formteils 7 verbleiben noch teilweise in entsprechenden Formvertiefungen der Formhälfte 1, so daß das Formteil 7 noch von der Formhälfte 1 gehalten wird.

Zu einem späteren Zeitpunkt, der der Stellung gemäß Fig. 1d entspricht, werden die Hydraulikzylinder 25 drucklos gemacht, so daß die Anschlagstifte 21 der Auswerferplatte 13 keinen Widerstand mehr entgegensetzen. Die Auswerferplatte 13 kann sich daher in einem zweiten Teilhub um die Strecke b weiter bewegen, wobei dieser zweite Teilhub von der Steuereinheit 17, vorzugsweise mit einer höheren Geschwindigkeit gesteuert wird, als der erste Teilhub. Das von den Auswerferstiften 9 um die zweite Teilhubstrecke b weiter bewegte Formteil 7 kommt nun völlig von der Formhälfte 1 frei und wird vom Greifwerkzeug (in Fig. 2 nicht dargestellt) ergriffen.

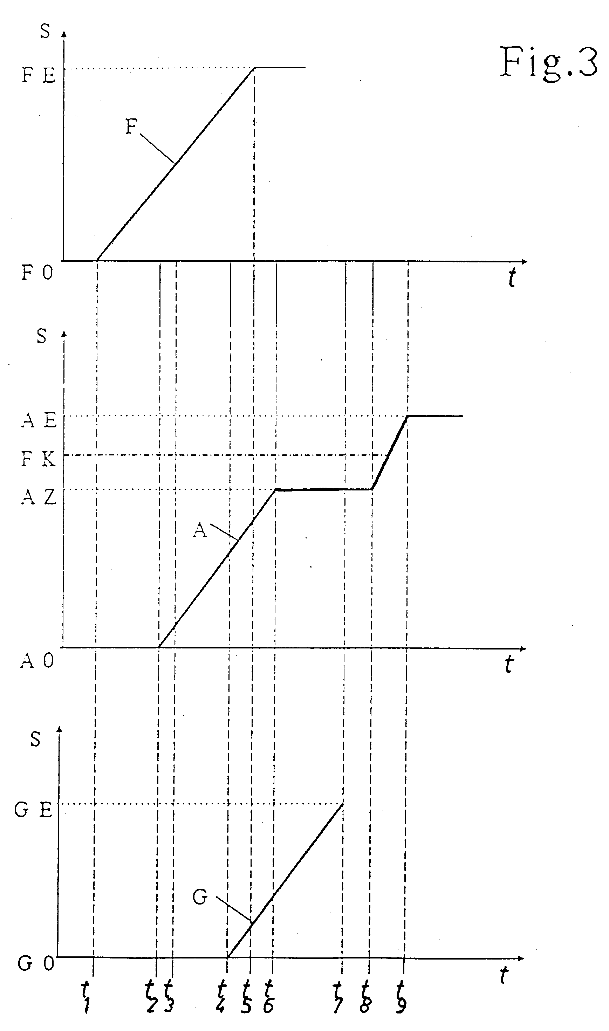

Fig. 3 zeigt ein Weg-Zeitdiagramm für die Bewegungen des Formwerkzeugs, des Auswerfers und des Greifwerkzeuges, wie sie bei dem erfindungsgemäßen Verfahren stattfinden können. In der Abszisse ist die Zeit und in der Ordinate der Weg für das Formwerkzeug (Kurve F), den Auswerfer (Kurve A), und das Greifwerkzeug (Kurve G) aufgetragen. Der Einfachheithalber ist angenommen, daß es sich jeweils um Bewegungen mit konstanter Geschwindigkeit, unter Vernachlässigung der Beschleunigungs- und Bremsphase, handelt. Die Ordinaten der Kurven F,A und G sind nicht maßstabsgleich, da Form, Auswerfer und Greifwerkzeug ganz verschiedene Wegstrecken zurücklegen.

Zu einem Zeitpunkt t1 beginnt das Öffnen der Form, wobei sich die bewegliche Formhälfte gemäß der Kurve F aus der Anfangsstellung FO in die Endstellung FE bewegt, die zum Zeitpunkt t5 erreicht wird. Bereits während dieser Öffnungsbewegung der Form beginnt im Zeitpunkt t2 der Auswerfer gemäß Kurve A seinen ersten Teilhub aus der Anfangsstellung AO in die Zwischenstellung AZ durchzuführen. Dabei dient die erste Phase dieses ersten Teilhubs, bis zu einem Zeitpunkt t3, zum Ablösen des Werkstücks von der Wandung des Formhohlraums, d.h. zur Überwindung der Wandhaftung, während ab dem Zeitpunkt t3 die eigentliche Bewegung bis in die Zwischenstellung AZ erfolgt. In dieser Zwischenstellung AZ hat das Werkstück die Grenze der Formkontur, die durch die Linie FK angedeutet ist, noch nicht überschritten, wird also noch von der Formkontur gegen Herabfallen festgehalten.

Wenn die Zwischenstellung AZ der Auswerfbewegung erreicht ist, oder auch schon zu einem früheren Zeitpunkt t4, der sogar schon vor dem Ende t5 der Formöffnungsbewegung liegen kann, beginnt sich das Greifwerkzeug aus der Ausgangsstellung G0 in die völlig eingefahrene Stellung GE zu bewegen, die zum Zeitpunkt t7 erreicht ist. Unmittelbar darauf zum Zeitpunkt t8 beginnt der zweite Teilhub der Auswerfbewegung, mit dem das Werkstück aus der Zwischenstellung AZ, unter Überschreitung der Formkontur FK, in die Entnahmestellung AE unter gleichzeitigem Ergreifen durch das Greifwerkzeug bewegt wird. Die Verweildauer des Auswerfers in der Zwischenstellung von t6 bis t8 sollte so bemessen sein, daß die in der Praxis unvermeidlichen zeitlichen Toleranzen für die Einfahrbewegung des Greifwerkzeuges ausgeglichen werden.

Abweichungen von der beschriebenen Ausführungsform sind möglich. So können anstelle eines einzigen Auswerfersystems in bekannter Weise auch zwei oder mehr Auswerfersysteme, d.h. von getrennten Antrieben beaufschlagte Gruppen von Auswerferstiften vorgesehen sein, und der erste und/oder zweite Teilhub kann durch entsprechende Aussteuerung nur des einen oder anderen Auswerfersystems durchgeführt werden. Die Start- und Endzeiten des Öffnungshubes, des Auswerfhubes und des Einfahrhubes des Greifwerkzeuges können durch Positionssteuerung in geeigneter Weise aufeinander abgestimmt werden, z.B. kann der Einfahrhub des Greifwerkzeuges gleichzeitig mit dem Öffnungshub der Form begonnen und gleichzeitig mit dem ersten Teilhub der Öffnungsbewegung beendet werden. Der zweite Teilhub des Auswerfvorganges kann sich unmittelbar an den ersten Teilhub anschließen, d.h. das Formteil braucht in der Zwischenstellung nicht zum Stillstand zu kommen.

Bei der beschriebenen hydraulischen Betätigung oder auch einer pneumatischen Betätigung des Auswerfers kann man die höhere Geschwindigkeit während des zweiten Teilhubes Z.B. dadurch erzeugen, daß man zu Beginn des zweiten Teilhubeseinen Druckspeicher hinzuschaltet, in dem während des ersten Teilhubes Druckmittel unter Druck gespeichert wird. Derartige Druckmittelsysteme und die zugehörigen Schaltventile sind dem Fachmann geläufig.

In weiterer Ausgestaltung der Erfindung kann die Auswerferbewegung auch in mehr als zwei Teilhüben durchgeführt werden. Insbesondere kann der erste Teilhub in zwei Schritte unterteilt werden. Dabei würde im ersten Schritt das Formteil nur geringfügig Soweit bewegt werden, daß es von der Wandung des Formhohlraums abgelöst wird, d.h. die Wandhaftung überwunden wird. Der anschließende zweite Schritt des ersten Teilhubes umfaßt dann die weitere Bewegung des Formstücks bis in die Zwischenstellung. Dieser zweite Schritt kann bereits mit größerer Geschwindigkeit als der erste Schritt durchgeführt werden, d.h. der erste Schritt des Loslösens des Formteils von der Formwandung kann besonders langsam und schonend durchgeführt werden. Am Beispiel der Fig. 3 würde dies bedeuten, daß die Bewegung a des Auswerfers im ersten Zeitintervall von t₂ bis t₃ als erster Teilschritt mit noch geringerer Geschwindigkeit durchgeführt wird als der restliche erste Teilhub von t₃ bis t₆.

## Patentansprüche

1. Verfahren zum Entformen eines Formteils aus einer Form, bei dem die Form durch Auseinanderbewegen der Formhälften (1, 3) geöffnet und das in der einen Formhälfte (1) befindliche Formteil durch einen oder mehrere durch eine Auswerferplatte betätigbare Auswerfer (9) aus der Formhälfte (1) bis in eine Entnahmestellung herausbewegt wird, in der das Formteil von einem zwischen die geöffneten Formhälften (1, 3) einfahrbaren Greifwerkzeug (4) ergriffen werden kann, wobei die Auswerferbewegung in mindestens zwei Teilhüben durchgeführt wird und das Formteil in einem ersten Teilhub bis in eine Zwischenstellung, in der es noch von der Formkontur der einen Formhälfte (1) gehalten ist, und dann in einem zweiten Teilhub in die Entnahmestellung außerhalb der Formkontur bewegt wird, dadurch **gekennzeichnet,** daß der erste Teilhub bereits während der Öffnungsbewegung der Form (1, 3) und/oder während der Einfahrbewegung des Greifwerkzeugs (4) begonnen wird, daß die Auswerferplatte (13) am Ende des ersten Teilhubs durch mindestens einen lösbaren Anschlag (21) gestoppt wird, der die Zwischenstellung des Formteils definiert, und daS zu Beginn des zweiten Teilhubes der Anschlag (21) gelöst und damit die Auswerferplatte (13) für den zweiten Teilhub freigegeben wird.

2. Verfahren nach Anspruch 1, dadurch **gekennzeichnet,** daß der erste Teilhub mit niedrigerer Geschwindigkeit als der zweite Teilhub durchgeführt wird.

3. Verfahren nach Anspruch 1 oder 2, dadurch **gekennzeichnet,** daß der erste Teilhub vor dem vollständigen Einfahren des Greifwerkzeugs beendet wird und zwischen dem ersten und zweiten Teilhub eine Stillstandsphase liegt.

4. Vorrichtung zur Durchführung des Verfahrens nach einem der Ansprüche 1 bis 3, mit einer Form, insbesondere Spritzgießform, mit zwei auseinander bewegbaren Formhälften (1, 3) und einer an der einen Formhälfte (1) angeordneten Auswerfereinrichtung (9, 13) mit einem oder mehreren auf das Formteil wirkenden Auswerferelementen (9), einem Auswerferantrieb (11) für die Auswerferelemente und einer Antriebssteuerung (17, 19) zum Steuern des Auswerferantriebs mit einem auf die Öffnungsbewegung der Formhälften abgestimmten Zeitablauf, dadurch **gekennzeichnet,** daß der Auswerfereinrichtung (9, 13) mindestens ein lösbarer Anschlag (21) zugeordnet ist, der die Auswerfereinrichtung in einer Zwischenstellung anhält, in welcher das Formteil noch nicht vollständig von der Formkontur freigestellt ist, und daß das Lösen des Anschlags zum Freigeben des zweiten Teilhubes der Auswerfereinrichtung durch die Antriebssteuerung (19, 17) steuerbar ist.

5. Vorrichtung nach Anspruch 4, dadurch **gekennzeichnet,** daß der oder jeder Anschlag (21) mit einem hydraulisch beaufschlagbaren Anschlag-Kolben (23) verbunden ist und gegen die Vorderseite einer rückseitig von dem Auswerferantrieb (11) beaufschlagten Auswerferplatte (13) wirkt, daß auch der Auswerferantrieb (11) einen oder mehrere Hydraulikzylinder (11) mit Kolben aufweist, wobei die Gesamtfläche aller Anschlag-Kolben (23) größer als die Kolbenfläche des Auswerferantriebs (11) ist, und daß die Antriebssteuerung (19,17) die Druckbeaufschlagung des oder der Anschlagkolben (23) während des ersten Teilhubes und ihre Druckentlastung zu Beginn des zweiten Teilhubes steuert.

## Claims

1. Process for demolding a molded part from a mold, in which the mold is opened by moving the mold halves (1, 3) apart and the molded part located in the one mold half (1) is moved by one or more ejectors (9), which can be operated by an ejector plate, out of the mold half (1) to a removal position, in which the molded part can be gripped by a gripping tool (4) which can be moved in between the opened mold halves (1, 3), the ejector movement being carried out in at least two partial strokes and the molded part being moved in a first Partial stroke to an intermediate position, in which it is still held by the mold contour of the one mold half (1), and then being moved in a second partial stroke to the removal position outside the mold contour, characterized in that the first partial stroke is commenced as early as during the opening movement of the mold (1, 3) and/or during the moving-in movement of the gripping tool (4), in that the ejector plate (13) is stopped at the end of the first partial stroke by at least one releasable stop (21), which defines the intermediate position of the mold part, and in that, at the beginning of the second partial stroke, the stop (21) is released and consequently the ejector plate (13) is enabled for the second partial stroke.

2. Process according to Claim 1, characterized in that the first partial stroke is carried out at lower speed than the second partial stroke.

3. Process according to Claim 1 or 2, characterized in that the first partial stroke is completed before the complete moving-in of the gripping tool and there is a standstill phase between the first partial stroke and second partial stroke.

4. Device for carrying out the process according to one of Claims 1 to 3, having a mold, in particular an injection mold, with two mold halves (1, 3), which can be moved apart, and an ejector means (9, 13), arranged on the one mold half (1) and having one or more ejector elements (9) acting on the molded part, an ejector drive (11) for the ejector elements and a drive control (17, 19) for controlling the ejector drive with a time sequence coordinated with the opening movement of the mold halves, characterized in that the ejector means (9, 13) is assigned at least one releasable stop (21), which stops the ejector means in an inter-mediate position, in which the molded part is still not completely freed from the mold contour, and in that the releasing of the stop for enabling the second partial stroke of the ejector means can be controlled by the drive control (19, 17).

5. Device according to Claim 4, characterized in that the stop or each stop (21) is connected to a hydraulically actuable stop piston (23) and acts against the front side of an ejector plate (13), which is actuated on the rear side by the ejector drive (11), in that the ejector drive (11) also has one or more hydraulic cylinders (11) with pistons, the overall surface area of all the stop pistons (23) being greater than the piston area of the ejector drive (11), and in that the drive control (19, 17) controls the pressurization of the stop piston or pistons (23) during the first partial stroke and their pressure relief at the beginning of the second partial stroke.

## Revendications

1. Procédé de démoulage de pièces moulées, dans lequel le moule est ouvert par séparation des moitiés de moule (1, 3) et un ou plusieurs éjecteur(s) (9) actionnable(s) par une plaque d'éjection font ressortir de la moitié de moule (1) la pièce moulée située dans la moitié de moule (1), jusqu'à une position d'extraction où la pièce moulée peut être saisie par un outil de préhension (4) susceptible d'être amené entre les moitiés de moule (1, 3) séparées, le mouvement d'éjection étant effectué en au moins deux mouvements de levée partiels, et la pièce moulée étant déplacée lors d'un premier mouvement de levée partiel jusqu'à une position intermédiaire où elle est encore maintenue par le contour du moule de l'une des moitiés de moule (1), puis lors d'un second mouvement de levée partiel jusqu'à la position d'extraction hors du contour du moule, caractérisé en ce que le premier mouvement de levée partiel est commencé dès le mouvement d'ouverture du moule (1, 3) et/ou le mouvement d'approche de l'outil de préhension (4), en ce que la plaque d'éjection (13) est arrêtée à la fin du premier mouvement de levée partiel par au moins une butée (21) rétractable qui définit la position intermédiaire du moule, et en ce qu'au début du second mouvement de levée partiel, la butée (21) est rétractée, libérant la plaque d'éjection (13) pour le second mouvement de levée partiel.

2. Procédé selon la revendication 1, caractérisé en ce que le premier mouvement de levée partiel s'effectue plus lentement que le second mouvement de levée partiel.

3. Procédé selon la revendication 1 ou 2, caractérisé en ce que le premier mouvement de levée partiel est terminé avant l'introduction complète de l'outil de préhension et en ce qu'une phase de repos est prévue entre le premier et le second mouvement de levée partiel.

4. Dispositif d'application du procédé selon l'une des revendications 1 à 3, avec un moule, en particulier un moule pour injection, comportant deux moitiés de moule (1, 3) éloignables l'une de l'autre et un dispositif d'éjection (9, 13) agencé sur l'une des moitiés de moule (1) comportant un ou plusieurs éléments d'éjection (9) agissant sur la pièce moulée, un entraînement d'éjection (11) pour les éléments d'éjection et une commande d'entraînement (17, 19) pour commander l'entraînement d'éjection sur un laps de temps déterminé en fonction du mouvement d'ouverture des moitiés de moule, caractérisé en ce que le dispositif d'éjection (9, 13) coopère avec au moins une butée rétractable (21) qui arrête le dispositif d'éjection dans une position intermédiaire où la pièce moulée n'est pas encore entièrement extraite du contour du moule, et en ce que la rétraction de la butée peut être commandée par la commande d'entraînement (19, 17) pour permettre le second mouvement de levée partiel du dispositif d'éjection.

5. Dispositif selon la revendication 4, caractérisé en ce que la ou chaque butée (21) est reliée à un piston de butée (23) à commande hydraulique et s'applique sur la face antérieure d'une plaque d'éjection (13) actionnée par l'arrière par l'entraînement d'éjection (11), en ce que l'entraînement d'éjection (11) présente également un ou plusieurs vérins hydrauliques (11) à piston, la surface totale de tous les pistons de butée (23) étant supérieure à la surface du piston de l'entraînement d'éjection (11), et en ce que la commande d'entraînement (19, 17) commande la mise en pression du ou des piston(s) de butée pendant le premier mouvement de levée partiel et leur mise hors pression au début du second mouvement de levée partiel.
